# EUROPEAN PATENT SPECIFICATION

(11) **EP 1 250 815 B1**
(45) Date of publication and mention of the grant of the patent: **14.05.2003**
(21) Application number: 00976050.5
(22) Date of filing: 20.11.2000
(51) Int. Cl.: H04N 9/28

(54) **PROJECTION TELEVISION SET WITH PARITY ERROR CHECKING**
TELEPROJEKTOR ANORDNUNG MIT PARITÄTISCHER FEHLERÜBERPRÜFUNG
TELEPROJECTEUR A VERIFICATION D'ERREURS DE PARITE

(30) Priority: 30.11.1999 DE 19957637
(43) Date of publication of application: 23.10.2002
(73) Proprietor: Thomson Licensing S.A., 92100 Boulogne-Billancourt (FR)
(72) Inventor: GLEIM, Günter, 78052 Villingen-Schwenningen (DE); HEIZMANN, Friedrich, 78052 Villingen-Schwenningen (DE)
(74) Representative: Rossmanith, Manfred, Dr.
(86) International application number: EP0011517
(87) International publication number: WO01041454

(56) References cited:
- EP-A- 0 689 363
- EP-A- 0 932 309

## Description

The present invention relates to a projection television set. In particular, the invention relates to an apparatus for convergence correction in a projection television set in which three monochromatic colour pictures tubes are imaged jointly on a screen in order to produce colour pictures. For this purpose, the projection television set is equipped with a convergence device which ensures that each of the colour picture tubes is imaged without geometric distortion, at the same time their pictures being brought into congruence as exactly as possible. In order to achieve this, the projection television set is provided with a convergence device which comprises a horizontal and a vertical convergence auxiliary deflection coil for each colour picture tube, current being applied to the set coils by means of driver circuits in such a way that, on the one hand, the geometric distortion is eliminated and, on the other hand, the images of all three picture tubes attain congruence.

The abovementioned convergence correction is performed using correction values stored in a volatile memory having a fast access time (RAM memory) in the convergence circuit. The stored correction values are converted into an analogue control signal in a digital/analogue converter and fed to the respective driver circuit. The driver circuit outputs a current corresponding to the correction value to the connected correction coil. Since the volatile memory initially contains no correction data when the television set is switched on, in a first step the data are read from a non-volatile memory and copied into the volatile memory. During this operation, it can happen that e.g. as a result of an electrical flushover in one of the picture tubes, the correction values copied into the RAM memory are corrupted, so that the convergence correction is unsatisfactory as a result.

Taking this as a departure point, the object of the invention is to provide an apparatus for convergence correction which identifies erroneous correction data and takes measures to remedy this.

This object is achieved by means of an apparatus for convergence correction which is characterized in that a control circuit is provided which examines the correction data that have been read for errors and, when errors occur, reads the correction data anew from the non-volatile memory.

One advantage of the apparatus according to the invention is that errors in the data records which can occur e.g. during copying from the non-volatile memory into the RAM memory are identified and not used for convergence correction. In this case, the control circuit reads the correction data record anew from the non-volatile memory in order to store it in the RAM memory. As a general rule, this single repetition of the copying operation suffices for eliminating any errors that have occured in the data records.

Repeated copying of the convergence correction data can also be intiated on the request of a microprocessor.

In accordance with one advantageous development of the invention, when errors are ascertained in the correction data, the convergence device connects its outputs to reference-earth potential, with the result that no currents flow in the convergence coils. This ensures that neither the driver circuits nor the convergence coils are damaged by an overload caused by erroneous data. According to the invention, a further non-volatile memory may also be provided, the data of which can be read by the control circuit.

In the rare cases in which, during copying of the correction data, not only the copy is erroneous but, due to unfortunate circumstances, the original data are also corrupted, the control circuit can access this further non-volatile memory, where an unaltered data record is available. Expediently, this further non-volatile memory is not activated during normal operation of the television set and is only addressed at all by the control circuit in the rare cases mentioned.

According to the invention, the control circuit may have a parity error detector by means of which errors in the data records can be effectively ascertained in a simple manner.

In a particularly cost-effective embodiment of the invention, the volatile memory is integrated in the control circuit.

A second aspect of the invention relates to a method for convergence correction in a projection television set. The object of the method is to identify errors in the convergence correction data and to intiate measures which prevent the disadvantageous consequences - outlined in the introduction - for the quality of the convergence correction from occuring.

This object is achieved by means of the method in accordance with claim 7.

The copying of the correction data from the non-volatile memory into the volatile memory is advantageously repeated until an error-free data record is present which ensures optimum convergence correction. In an advantageous development of the method according to the invention, to be on the safe side the outputs of the convergence correction circuit are set to reference-earth potential in order to preclude the erroneous correction data from being able to lead to damage to the television set. The non-volatile memory is expediently activated only for as long as is necessary to copy its data content into the volatile memory. This ensures that it is practically impossible for the data content of the non-volatile memory to be corrupted.

According to the invention, it may also be provided that a further non-volatile memory is read if an error cannot be eliminated by the data being copied anew from the first non-volatile memory into the volatile memory. The second non-volatile memory is also activated only for as long as is necessary to copy its data content into the volatile memory. Of course, the data of the second non-volatile memory are then also available for being copied into the first non-volatile memory, whose data content has proved to be erroneous.

Subclaims relate to further advantageous developments of the method according to the invention.

An exemplary embodiment of the invention is illustrated in the drawing, in which:
Figure 1a shows a schematic view of the projection television set according to the invention from the front;
Figure 1b shows a plan view of the screen of the television set from figure 1a with the convergence raster inserted; and
Figure 2 shows a schematic circuit diagram of a projection television set.

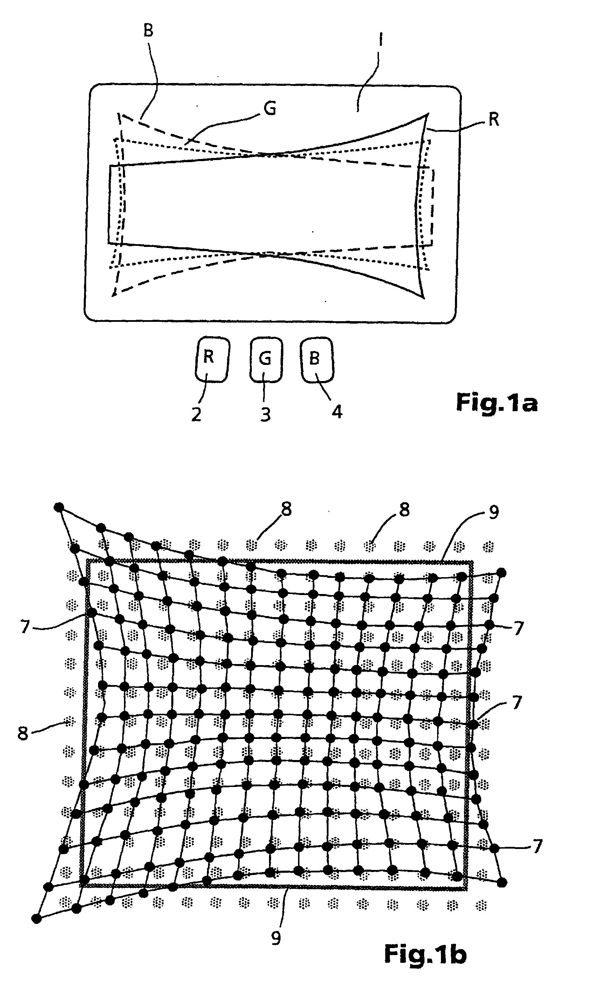

Figure 1a shows a plan view from the front of the screen 1 of a television set according to the invention, on which the pictures are projected from three monochromatic picture tubes 2, 3, 4. As is shown schematically in the figure, the picture tubes 2..4 are arranged geometrically differently. Imaging errors thus occur on the screen, which are different for the individual picture tubes. These picture errors are corrected by means of additional correction coils, which are mounted in front of the actual deflection coils, on the coil neck of the picture tubes. The correction is carried out for each individual picture tube 2..4 both in the horizontal direction and in the vertical direction, that is to say there are a total of six correction coils with the associated driver circuits in the television set, and these are each activated by one convergence circuit. A correction coil with the associated circuitry is referred to as a convergence channel, so that the television set has a total of six convergence channels.

Figure 1b once again illustrates the effect of convergence correction on the visible picture for the colour blue, solid black lines being used to illustrate a convergence raster prior to the convergence correction. The intersection points 7 of the raster are marked by black dots. The convergence correction has the effect of shifting the intersection points 7 on the screen in such a way as to produce a rectangular raster. The corrected new positions of the intersection points are defected as hatched dots 8 in Figure 1b. The hatched line 9 shows the boundary of the visible region of the screen. As can be seen from figure 1b, the picture presented is corrected beyond the visible region. That is important in the case of projection television sets which are equipped with optical sensors arranged outside the visible region. These sensors make it possible for example for the user himself to recorrect the static convergence at the installation location of the television set.

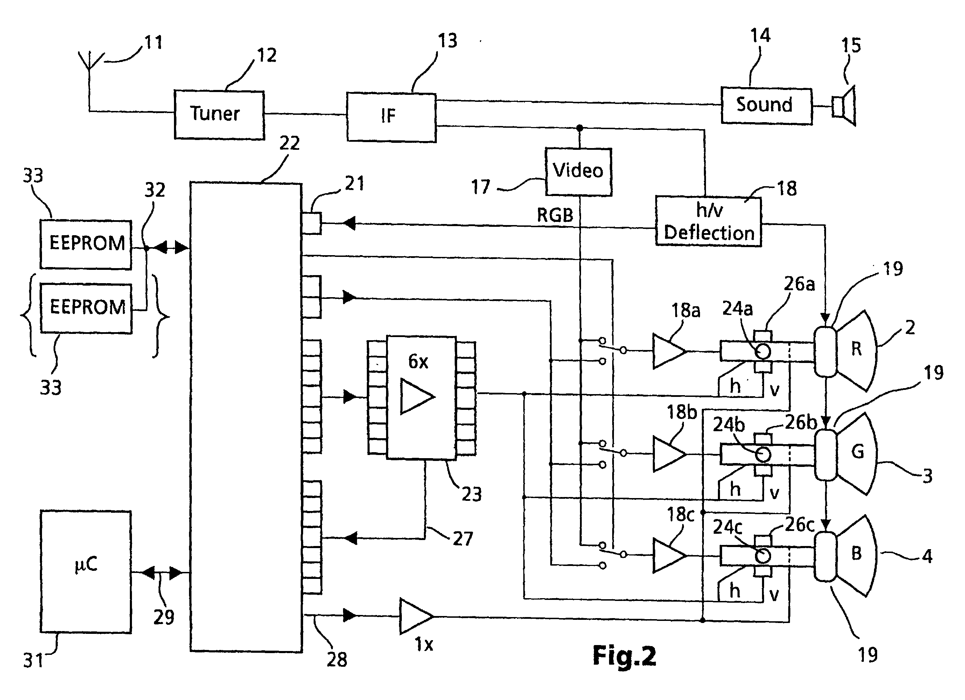

Figure 2 schematically illustrates the structure of a projection television set. Via an antenna 11 a tuner 12 receives a television signal, which is output to an intermediate high frequency stage 13. In the intermediate-frequency stage 13, an audiosignal is separated from the received signal and fed via an audio output stage 14 to a loudspeaker 15 for sound reproduction. Furthermore, a CVBS signal is derived from the intermediate-frequency signal, and is separated into a video signal and into sync signals. The videosignal is processed and dematrixed in a video signal processing unit 17. The RGB signal generated in this way is fed to the corresponding picture tubes 2, 3 and 4 via suitable amplifier circuits 18a, 18b, 18c. For the sake of clarity, only a single signal line is depicted in figure 2. It goes without saying, however, that the colour signals are routed separately as is known in the prior art.

Furthermore, the horizontal and vertical sync signals are separated from the CVBS signal in a deflection unit 18 comprising suitable deflection circuits, and are fed via corresponding amplifiers to the horizontal and vertical deflection coils of the picture tubes 2, 3 and 4, the deflection coils being designated in their entirety by the reference symbol 19 in Figure 2. For synchronisation of the convergence correction with the picture representation, the separated sync signals are, moreover, also output to an input 21 of an integrated convergence circuit 22. The convergence circuit 22 is provided with an internal volatile memory having a fast access time, a so-called RAM memory. Correction values are read from this memory for all six convergence channels line by line and, after digital/analogue conversion, are fed to a power output stage 23. The power output stage 23 comprises a respective amplifier for each convergence channel, which amplifier applies a correction current corresponding to the correction values to the horizontal convergence coils 24a, 24b, 24c and the vertical convergence coils 26a, 26b, 26c. Feedback loops schematically indicated by the line 27 are provided in order to avoid deviations e.g. on account of temperature drift or ageing of components. In addition, the convergence circuit 22 also influences the focus voltages of the picture tubes 2, 3 and 4 by means of a signal which is output at an output 28. However, the control of the focus voltage is not the subject-matter of the present invention.

A microprocessor 31 is connected to the convergence circuit 22 via a data line 29, and controls the functions of the convergence circuit 22. A number of non-volatile memories 33, so-called EEPROMs, are connected to the convergence circuit 22 via a further data line 32. Only two of these EEPROMs are illustrated in Figure 2. In the exemplary embodiment of the invention that is shown, however, up to seven of these EEPROMs 33 can be connected as required with the aid of the data line.

When the television set is switched on, the microprocessor 31 drives the convergence circuit 22 in such a way that a complete convergence data record is copied from the EEPROM into the internal RAM memory of the convergence IC 22. As soon as the data transfer has ended, the data line 32 is deactivated again. During operation of the television receiver, the convergence correction data are read from the RAM memory line by line. During the read-out, the correction data are examined for parity errors by an evaluation circuit. In the present exemplary embodiment, the evaluation circuit for parity checking is integrated in the convergence IC 22. However, it is also possible for this evaluation circuit to be realized as an external circuit. A parity error can arise e.g. as follows: while the correction data are being copied from an EEPROM 33 into the RAM memory, a voltage flashover takes place in a picture tube and corrupted data are stored in the RAM memory. In order to prevent damage from occuring on account of corrupted data in the power output stage 23 or in the convergence coils 24a .. 24c, 26a .. 26c, to be on the safe side the digital/analogue converters are turned off, so that their analogue output signal corresponds to the reference-earth potential.

In order to facilitate access to the data for the dynamic convergence correction for the colours red, green and blue, these data are stored in three memory areas with a common address range. For each colour, a data word having a word length of 22 bits is stored for each grid point. For a raster having 16 x 13 correction points, thus results in 208 data words for each primary colour. Furthermore, the memory area for the colour red is enlarged by 19 words each having a length of 24 bits. These so-called register data represent a set of parameters by means of which the totality of the correction data can be adapted to different televison standards, e.g. PAL or NTSC. There are three such register data records in each EEPROM. Since three bytes are required for each data word, the memory space requirement for an EEPROM is two kilobytes. The highest address (7 FF) in the EEPROM that is always addressed first is reserved for the address of the EEPROM set as standard and also the address of the register data record set as standard. The content of this memory location defines which EEPROM module is read out and which register data record is used. Overall, up to seven EEPROMs can be addressed.

The invention affords increased security not only with regard to corruption of the correction data records by voltage flashovers but also with regard to recorrection of convergence by the user. As mentioned in the introduction, in some projection television sets it is possible e.g for the static convergence which is influenced by the earth's magnetic field prevailing at the installation location to be altered by the user. The altered convergence correction data are first stored in the RAM memory and only then copied into the EEPROM 33 set as standard. If errors occur in this process, then it is no longer readily possible for the user to fall back upon a correction data record set by the manufacturer. In such a case, however, at the very least a service engineer can access an unaltered data record present in another EEPROM 33.

## Claims

1. Apparatus for convergence correction in a projection television set having monochromatic light sources (2, 3, 4) which are imaged on a screen (1),
having a convergence device for influencing the imaging of the light sources on the screen,
having a control circuit (22), which, when the projection televison set is turned on, reads correction data from a non-volatile memory (33) set as standard via a first data line (32) and stores them in a volatile memory which is connected to the convergence device via a second data line and from which the correction data can be read as input values for the convergence device, **characterized in that**
the control circuit examines the correction data that have been read for errors and, when errors occur, reads the correction data anew from the non-volatile memory.

2. Apparatus according to claim 1, **characterized in that**
when errors occur in the correction data that have been read, the control circuit (22) connects the outputs of the convergence device to reference-earth potential.

3. Apparatus according to claim 1, **characterized in that**
at least one further non-volatile memory (32) is provided, which can be read by the control circuit (22).

4. Apparatus according to claim 3, **characterized in that**
the further non-volatile memory (33) is isolated by switching means during normal operation and can be addressed by the control circuit (22, 31) only when errors that cannot be eliminated occur in the correction data.

5. Apparatus according to claim 1, **characterized in that**
the control circuit (22) has a parity error detector and examines the correction data read from the volatile memory for parity errors.

6. Apparatus according to claim 1, **characterized in that**
the volatile memory is integrated in the control circuit (22).

7. Apparatus according to claim 1, **characterized in that**
the light sources are monochromatic colour picture tubes (2, 3, 4), and **in that** the convergence device comprises digital/analogue converters, output amplifiers (23) and deflection coils (24a - 24c; 26a - 26c) by means of which it is possible to influence the ray landing location in the cathode ray tubes.

8. Method for convergence correction in a projection televison set having monochromatic light sources (2, 3, 4) which are imaged on a screen (1),
having a convergence device for influencing the imaging of the light sources on the screen, the method having the following steps:
a) after the projection televison set has been switched on, correction data are read into a volatile memory from a first, non-volatile memory (33) set as standard,
b) when the correction data are output to the convergence device, the data are checked for errors, and
c) as soon as an error is ascertained in the correction data, the correction data are read anew from the non-volatile memory into the volatile memory.

9. Method according to claim 8, **characterized in that**
as soon as an error is ascertained in the correction data, the outputs of the convergence device are connected to reference-earth potential.

10. Method according to claim 8, **characterized in that**
upon the repeated occurence of an error in the correction data, an otherwise deactivated second non-volatile memory is activated and the correction data stored therein are read into the volatile memory, after which the second non-volatile memory is deactivated again.

11. Method according to claim 10, **characterized in that**
after deactivation of the second non-volatile memory, the data from the volatile memory are copied into the first non-volatile memory.

12. Method according to claim 8, **characterized in that**
changes in the correction data are firstly stored in the volatile memory and are then copied into the first non-volatile memory.

13. Method according to claim 8, **characterized in that**
firstly only an address which refers to that non-volatile memory from which the correction data are intended to be read is read from the first non-volatile memory.

14. Projection television set having an apparatus according to claim 1.

## Patentansprüche

1. Vorrichtung zur Konvergenzkorrektur in einem Projektionsfernsehgerät mit monochromatischen Lichtquellen (2, 3, 4), die auf einen Schirm (1) abgebildet werden,
mit einer Konvergenzeinrichtung, um die Abbildung der Lichtquellen auf dem Schirm zu beeinflussen,
mit einer Steuerschaltung (22), welche Korrekturdaten beim Anschalten des Projektionsfernsehgerätes aus einem standardmäßig eingestellten nicht-flüchtigen Speicher (33) über eine erste Datenleitung (32) ausliest und in einen flüchtigen Speicher abspeichert, der über eine zweite Datenleitung an die Konvergenzeinrichtung angeschlossen ist und aus welchem die Korrekturdaten als Eingabewerte für die Konvergenzeinrichtung auslesbar sind, **dadurch gekennzeichnet, daß**
die Steuerschaltung die ausgelesenen Korrekturdaten auf Fehler untersucht und beim Auftreten von Fehlern die Korrekturdaten aus dem nicht-flüchtigen Speicher erneut ausliest.

2. Vorrichtung nach Anspruch 1, **dadurch gekennzeichnet, daß** die Steuerschaltung (22) beim Auftreten von Fehlern in den ausgelesenen Korrekturdaten die Ausgänge der Konvergenzeinrichtung auf Bezugspotential schaltet.

3. Vorrichtung nach Anspruch 1, **dadurch gekennzeichnet, daß** wenigstens ein weiterer nicht-flüchtiger Speicher (32) vorgesehen ist, der von der Steuerschaltung (22) auslesbar ist.

4. Vorrichtung nach Anspruch 3, **dadurch gekennzeichnet, daß** der weitere nicht-flüchtige Speicher (33) im Normalbetrieb durch Schaltmittel getrennt ist und nur beim Auftreten nicht behebbarer Fehler in den Korrekturdaten durch die Steuerschaltung (22, 31) ansprechbar ist.

5. Vorrichtung nach Anspruch 1, **dadurch gekennzeichnet, daß** die Steuerschaltung (22) einen Paritätsfehlerdetektor aufweist und die aus dem flüchtigen Speicher ausgelesenen Korrekturdaten auf Paritätsfehler untersucht.

6. Vorrichtung nach Anspruch 1, **dadurch gekennzeichnet, daß** der flüchtige Speicher in der Steuerschaltung (22) integriert ist.

7. Vorrichtung nach Anspruch 1, **dadurch gekennzeichnet, daß** die Lichtquellen monochromatische Farbbildröhren (2, 3, 4) sind und daß die Konvergenzeinrichtung Digital/Analog-Wandler, Ausgangsverstärker (23) und Ablenkspulen (24a - 24c; 26a - 26c) umfaßt, mittels derer der Strahllandeort in den Kathodenstrahlröhren beeinflußbar ist.

8. Verfahren zur Konvergenzkorrektur in einem Projektionsfernsehgerät mit monochromatischen Lichtquellen (2, 3, 4), die auf einen Schirm (1) abgebildet werden,
mit einer Konvergenzeinrichtung, um die Abbildung der Lichtquellen auf dem Schirm zu beeinflussen, wobei das Verfahren die folgenden Schritte aufweist:
a) nach dem Einschalten des Projektionsfernsehgerätes werden Korrekturdaten aus einem ersten standardmäßig eingestellten nicht-flüchtigen Speicher (33) in einen flüchtigen Speicher eingelesen,
b) bei der Ausgabe der Korrekturdaten an die Konvergenzeinrichtung werden die Daten auf Fehler überprüft, und
c) sobald ein Fehler in den Korrekturdaten festgestellt wird, werden die Korrekturdaten erneut aus dem nicht-flüchtigen Speicher in den flüchtigen Speicher eingelesen.

9. Verfahren nach Anspruch 8, **dadurch gekennzeichnet, daß** sobald ein Fehler in den Korrekturdaten festgestellt wird, die Ausgänge der Konvergenzeinrichtung auf Bezugspotential geschaltet werden

10. Verfahren nach Anspruch 8, **dadurch gekennzeichnet, daß** beim wiederholten Auftreten eines Fehlers in den Korrekturdaten ein ansonsten deaktivierter zweiter nicht-flüchtiger Speicher aktiviert wird und die darin abgespeicherten Korrekturdaten in den flüchtigen Speicher eingelesen werden, wonach der zweite nicht-flüchtige Speicher wieder deaktiviert wird.

11. Verfahren nach Anspruch 10, **dadurch gekennzeichnet, daß** nach dem Deaktivieren des zweiten nicht-flüchtigen Speichers die Daten aus dem flüchtigen Speicher in den ersten nicht-flüchtigen Speicher kopiert werden.

12. Verfahren nach Anspruch 8, **dadurch gekennzeichnet, daß** Änderungen der Korrekturdaten zunächst in dem flüchtigen Speicher abgespeichert werden und danach in den ersten nicht-flüchtigen Speicher kopiert werden.

13. Verfahren nach Anspruch 8, **dadurch gekennzeichnet, daß** aus dem ersten nicht-flüchtigen Speicher zunächst nur eine Adresse ausgelesen wird, die auf denjenigen nicht-flüchtigen Speicher hinweist, aus welchem die Korrekturdaten ausgelesen werden sollen.

14. Projektionsfernsehgerät mit einer Vorrichtung nach Anspruch 1.

## Revendications

1. Dispositif de correction de convergence dans un poste de télévision à projection ayant des sources de lumière monochromatiques (2, 3, 4) qui sont imagées sur un écran (1),
ayant un dispositif de convergence pour influencer l'imagerie des sources de lumière sur l'écran,
ayant un circuit de commande (22) qui, quand le poste de télévision à projection est allumé, lit des données de correction à partir d'une mémoire rémanente (33) établie d'office par l'intermédiaire d'une première ligne de données (32) et les mémorise dans une mémoire non rémanente qui est connectée au dispositif de convergence par l'intermédiaire d'une deuxième ligne de données et à partir de laquelle les données de correction peuvent être lues comme valeurs d'entrée du dispositif de convergence, **caractérisé en ce que**
le circuit de commande examine les données de correction qui ont été lues à la recherche d'erreurs, et, lorsque des erreurs interviennent, lit les données de correction à nouveau à partir de la mémoire rémanente.

2. Dispositif selon la revendication 1, **caractérisé en ce que**
quand des erreurs interviennent dans les données de correction qui ont été lues, le circuit de commande (22) connecte les sorties du dispositif de convergence au potentiel de terre de référence.

3. Dispositif selon la revendication 1, **caractérisé en ce que**
au moins une autre mémoire rémanente (32) est fournie, laquelle peut être lue par le circuit de commande (22).

4. Appareil selon la revendication 3, **caractérisé en ce que**
l'autre mémoire rémanente (33) est isolée par un moyen de commutation durant le fonctionnement normal et peut être sollicitée par le circuit de commande (22, 31) uniquement quand des erreurs qui ne peuvent pas être éliminées se produisent dans les données de correction.

5. Appareil selon la revendication 1, **caractérisé en ce que**
le circuit de commande (22) a un détecteur d'erreurs de parité et examine les données de correction lues à partir de la mémoire non rémanente à la recherche d'erreurs de parité.

6. Appareil selon la revendication 1, **caractérisé en ce que**
la mémoire non rémanente est intégrée dans le circuit de commande (22).

7. Appareil selon la revendication 1, **caractérisé en ce que**
les sources de lumière sont des tubes-image couleur monochromatiques (2, 3, 4), et **en ce que** le dispositif de convergence comprend des convertisseurs numériques/analogiques, des amplificateurs de sortie (23) et des bobines de déviation (24a - 24c ; 26a - 26c) au moyen desquels il est possible d'influencer le lieu où se posent les rayons dans les tubes à rayons cathodiques.

8. Procédé de conversion de convergence dans un poste de télévision à projection ayant des sources de lumière monochromatiques (2, 3, 4) qui sont imagées sur un écran (1),
ayant un dispositif de convergence pour influencer l'imagerie des sources de lumière sur l'écran, le procédé ayant les étapes suivantes :
a) après l'allumage du poste de télévision à projection, des données de correction sont lues dans une mémoire non rémanente depuis une première mémoire rémanente (33) établie d'office,
b) quand les données de correction sont passées au dispositif de convergence, les données sont vérifiées à la recherche d'erreurs, et
c) aussitôt qu'une erreur est décelée dans les données de correction, les données de correction sont lues à nouveau depuis la mémoire rémanente dans la mémoire non rémanente.

9. Procédé selon la revendication 8, **caractérisé en ce que**
aussitôt qu'une erreur est décelée dans les données de correction, les sorties du dispositif de convergence sont connectées à un potentiel de terre de référence.

10. Procédé selon la revendication 8, **caractérisé en ce que**
lors de l'occurrence répétée d'une erreur dans les données de correction, une deuxième mémoire rémanente autrement désactivée est activée et les données de correction mémorisées dans celle-ci sont lues dans la mémoire non rémanente, après quoi la deuxième mémoire rémanente est désactivée à nouveau.

11. Procédé selon la revendication 10, **caractérisé en ce que**
après la désactivation de la deuxième mémoire rémanente, les données de la mémoire non rémanente sont copiées dans la première mémoire rémanente.

12. Procédé selon la revendication 8, **caractérisé en ce que**
des changements des données de correction sont d'abord mémorisés dans la mémoire non rémanente puis copiés dans la première mémoire rémanente.

13. Procédé selon la revendication 8, **caractérisé en ce que**
premièrement une seule adresse qui se réfère à cette mémoire rémanente à partir de laquelle les données de correction doivent être lues est lue à partir de la première mémoire rémanente.

14. Poste de télévision à projection ayant un appareil conformément à la revendication 1.
